(19) Europäisches Patentamt
European Patent Office
Office européen des brevets

(11) **EP 3 888 778 B1**

(12) **EUROPEAN PATENT SPECIFICATION**

(45) Date of publication and mention
of the grant of the patent:
**08.04.2026 Bulletin 2026/15**

(21) Application number: **21160175.2**

(22) Date of filing: **28.02.2017**

(51) International Patent Classification (IPC):
*B01F 23/232* (2022.01)    *B01F 23/2373* (2022.01)
*B01F 25/10* (2022.01)    *B01F 25/25* (2022.01)
*B01F 25/433* (2022.01)    *B01F 25/434* (2022.01)
*B01F 25/435* (2022.01)    *B01F 25/452* (2022.01)
*C11D 1/14* (2006.01)    *C11D 1/34* (2006.01)
*C11D 1/62* (2006.01)    *C11D 1/72* (2006.01)
*C11D 1/88* (2006.01)    *C11D 3/00* (2006.01)
*C11D 17/00* (2006.01)    *C09K 3/00* (2006.01)
*D06F 35/00* (2006.01)    *B08B 3/10* (2006.01)

(52) Cooperative Patent Classification (CPC):
**C11D 3/0094; B01F 23/2322; B01F 23/2323;
B01F 23/2373; B01F 25/1041; B01F 25/25;
B01F 25/4332; B01F 25/4341; B01F 25/435;
B01F 25/4521; B01F 25/45211; C09K 3/00;
C11D 1/14; C11D 1/34; C11D 1/62;**    (Cont.)

(54) **FINE BUBBLE GENERATION APPARATUS**

FEINBLASENERZEUGUNGSVORRICHTUNG

APPAREIL DE GÉNÉRATION DE BULLES FINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2017 JP 2017015846
31.01.2017 JP 2017015863**

(43) Date of publication of application:
**06.10.2021 Bulletin 2021/40**

(62) Document number(s) of the earlier application(s) in
accordance with Art. 76 EPC:
**17895000.2 / 3 578 627**

(73) Proprietor: **Kinboshi Inc.
Tokyo 102-0081 (JP)**

(72) Inventors:
• **Iida, Hiroshi
Gunma, 379-2153 (JP)**
• **Kosuga, Sho
Gunma, 379-2153 (JP)**
• **Ishii, Yuichi
Tokyo, 102-0081 (JP)**

(74) Representative: **Hoffmann Eitle
Patent- und Rechtsanwälte PartmbB
Arabellastraße 30
81925 München (DE)**

(56) References cited:
EP-A1- 2 944 371    WO-A1-2013/047393
WO-A1-2013/125051    CN-A- 103 111 033
DE-A1- 19 510 651    GB-A- 113 032
US-A1- 2012 126 436    US-A1- 2015 367 313

EP 3 888 778 B1

(52) Cooperative Patent Classification (CPC): (Cont.)
**C11D 1/72; C11D 1/88; C11D 17/0008;**
**D06F 35/002;** B08B 3/10; C11D 2111/42

**Description**

CROSS-REFERENCE TO RELATED APPLICATIONS

This application claims the benefits of priorities based on Japanese Patent Application Nos. 2017-015846 and 2017-015863, filed on January 31, 2017.

BACKGROUND OF THE INVENTION

Field of the Invention

The present invention relates to a fine bubble generation apparatus which does not need any facilities such as a large pump and which is small in size and low in cost.

Background Art

Rental clothing and linens for use in care homes, hospitals, and the like, and uniforms for use in security companies and the like are demanded to have cleanliness for the reason of sanitary management. Therefore, such clothing, linens and uniforms are frequently laundered, and there are concerns about the influence of cleaning discharge water on the environment. Furthermore, wear of objects to be washed, such as clothing, is also caused by such frequent laundering, and cannot be avoided (Fundamental properties involved in the washing for the micro/nano-bubble water: Bulletin of the Department of Home Economics, Kyoritsu Women's Junior College).

While inpatients and elderly people have a bath or a bed-bath in care homes, hospitals, and the like in order to keep cleanliness of the bodies thereof, it is not preferable to apply a load to the skin in many cases. In particular, patients and elderly people with dermatosis are needed to keep cleanliness because dirt on the skin causes symptoms to be worsened, but irritation to the skin must be avoided. Thus, there is a need for a washing method which less apply physical irritation to the skin.

In recent years, minute bubbles called fine bubbles are utilized in various fields, for example, environmental fields including water clarification, industrial fields including washing and combustion improvement, food fields including sterilization and washing, and daily fields including bathing and health promotion. In addition, washing by means of such fine bubbles is expected as an art which less has an effect on objects to be washed and the environment. For example, JP-A No. 2005-118462 discloses, as a method for washing with fine bubbles, a cleaning apparatus where microbubbles are used in a rinsing step in cleaning. JP-A No. 2007-83142 discloses a washing method by a combination of a washing liquid including a surfactant with microbubbles, and JP-A No. 2016-132712 describes an enhancement in the effect of washing a contact lens with fine bubbles by addition of a disinfectant and a surfactant.

Fine bubbles refer to bubbles having a diameter of 100 $\mu$m or less, and in particular, visible cloudy bubbles having a diameter of 1 to 100 $\mu$m are referred to as microbubbles and invisible clear and colorless bubbles having a diameter of 1 $\mu$m or less are referred to as ultrafine bubbles (HP of The Union of Fine Bubbles Scientists and Engineers: http://www.fb-union.org/index.html).

Fine bubbles are very minute and thus have various distinctive properties as compared with usual bubbles. In particular, fine bubbles have a larger specific surface area at the same volume than usual bubbles, and thus are very large in physical adsorption force on the action surface at the gas-liquid interface. Such an adsorption action of bubbles is important for all applied fields, and it is thus preferable to impart a small bubble diameter whenever possible and a high bubble density whenever possible in order to allow bubbles to have a large surface area whenever possible at the same volume.

As a fine bubble generation apparatus currently known, for example, JP-A No. 2006-289183 describes a method and an apparatus for producing nanobubbles in a liquid, by feeding liquid including microbubbles to a storage tank and applying an ultrasonic vibration to the liquid to thereby break the microbubbles in the liquid with pressure. JP-A No. 2012-250138 describes an apparatus for rapidly shrinking microbubbles, by applying a high pressure to microbubbles included in a liquid and thus applying physical irritation thereto.

DE 195 10 651 A1 describes a method for the preparation of aqueous coating compositions based on resin binders containing isocyanate-reactive hydrogen atoms and polyisocyanates, by mixing the components with water, wherein the mixture is forced at a pressure of from 1 to 30 MPa through a nozzle of small size in at least one dimension.

CN 103 111 033 A describes a gas-liquid mixing device. The gas-liquid mixing device comprises a mixing cavity which can achieve mixing of gas and liquid, wherein the mixing cavity is a hollow cylinder, one end of the cylinder is provided with a liquid inlet, and the other end of the cylinder is provided with a mixing liquid outlet; a gas inlet is formed in the side wall of the cylinder of the mixing cavity; a rotational flow generation device formed by a baffle plate is arranged at a combined part between the mixing cavity and the liquid inlet; a plurality of through holes which are obliquely and symmetrically formed along the axial direction of the cylinder of the mixing cavity are formed in the baffle plate; and a cylindrical filter screen foaming device is arranged at the combined part between the mixing cavity and the liquid outlet.

US 2012/126436 A1 describes a micro-bubble generator provided with a swirl chamber, a fluid introduction opening connected to the swirl chamber, the fluid introduction opening for introducing fluid along a line tangent to an inner surface of the swirl chamber, and a discharge tube for guiding the fluid in the direction substantially perpendicular to the direction in which the fluid is introduced. The discharge tube penetrates a wall surface of the swirl chamber and protrudes to an interior of the swirl chamber. Said US 2012/0126436 A1 discloses a fine bubble generation apparatus comprising a fine bubble generation mechanism that generates a fine bubble-containing fluid from a mixed fluid of a liquid and air, a gas-liquid inflow pipe that allows for introduction of the mixed fluid, a cylindrical gas-liquid mixed phase generation mechanism where the gas-liquid inflow pipe is provided at the center of a cylinder, an eddy-current generation mechanism and a discharge pipe provided on a side surface of the gas-liquid mixed phase generation mechanism, wherein the gas-liquid inflow pipe is centrally pierced from an upper surface of the cylinder, and an end thereof, through which the mixed fluid is discharged, is placed with a gap from a bottom section of the main body of the cylinder.

Citation List

Patent Literature

Patent Literature 1: JP-A No. 2005-118462
Patent Literature 2: JP-A No. 2007-83142
Patent Literature 3: JP-A No. 2016-132712
Patent Literature 4: JP-A No. 2006-289183
Patent Literature 5: JP-A No. 2012-250138

Non-Patent Literature

Non-Patent Literature 1: Fundamental properties involved in the washing for the micro/nano-bubble water: Bulletin of the Department of Home Economics, Kyoritsu Women's Junior College
Non-Patent Literature 2: HP of The Union of Fine Bubbles Scientists and Engineers, http://www.fb-union.org/index.html

## SUMMARY OF THE INVENTION

However, it cannot be said that such washing is sufficiently studied, and it cannot also be said with respect to the field where high sanitary conditions are demanded that a sufficient effect is obtained by washing with only fine bubbles. For example, the cleaning apparatus described in JP-A No. 2005-118462 performs laundering by a conventional laundry with a conventional washing liquid including a detergent in a washing step before rinsing. JP-A No. 2007-83142 and JP-A No. 2016-132712 describe use of a surfactant for an enhancement in wettability to a washing object, and do not propose any synergetic effect between the type of the surfactant to be selected and the effect of washing with fine bubbles.

Thus, all such literature do not sufficiently dissolve any mechanisms for an enhancement in the effect of washing with fine bubbles, and cannot also be said to sufficiently dissolve various conditions for an enhancement in the effect of washing, for example, for an enhancement in the effect of washing due to a combination of fine bubbles with any additive.

As described above, a method for washing with fine bubbles, which is a washing method less causing the burden of discharge water to the environment and less applying physical irritation to a washing object, needs an aqueous composition having a washing ability comparable to or more than that of a detergent without use of any detergent and the like in combination.

Such an apparatus for generation of fine bubbles has the problems of needing a high pressure pump and a large apparatus and thus being increased in installation space and introduction cost. Such an apparatus also has the problem of not sufficiently obtaining generation of fine bubbles because the amount and the pressure of water are restricted in the case of use of a small pump small in footprint and low in cost as in a conventional apparatus.

Accordingly, there is a need for a fine bubble generation apparatus small in size and low in cost, which can generate a desired amount of fine bubbles even at a lower pressure of water and in a smaller amount of water than those of a conventional apparatus.

The present inventors have made intensive studies in order to solve the above problems, and as a result, have led to completion of an apparatus small in size and low in cost without use of any large pump, which enables fine bubbles sufficiently small in bubble diameter and high in bubble density to be generated. The present inventors also have led to completion of a method for producing fine bubbles by use of such an apparatus.

Accordingly, the present invention provides the following fine bubble generation apparatus and production method.

(i) A fine bubble generation apparatus including a fine bubble generation mechanism that generates a fine bubble-containing fluid from a mixed fluid of a liquid and air,

a gas-liquid inflow pipe that allows for introduction of the mixed fluid;
a cylindrical gas-liquid mixed phase generation mechanism where the gas-liquid inflow pipe is provided at the center of a cylinder;
an eddy-current generation mechanism which is provided so as to divide the interior of the gas-liquid mixed phase generation mechanism into two sections, which comprises an upper surface having 2 to 4 holes and a lower surface having 2 to 4 holes disposed with being shifted from the holes of the upper surface, and in which the holes of the upper surface and the holes of the lower surface are pierced so as to correspond to each other; and
a discharge pipe provided on a side surface of the gas-liquid mixed phase generation mechanism (25), wherein the fine bubble generation mechanism includes a wall that partitions the mixed fluid to be introduced and a fine bubble-containing fluid to be discharged,
the wall has a shape opened at a bottom section and selected from the group consisting of a cone, a frustum and a column,
a through-hole for introduction of the mixed fluid into the interior of the wall is formed on at least a part of a side surface of a shape partitioned by the wall, and
the mixed fluid is introduced through the through-hole into the interior of the wall and discharged as a fine bubble-containing fluid from the opening of the bottom section, and
the bubble generation mechanism is provided on an end of the gas-liquid inflow pipe through which the mixed fluid is discharged, and
the gas-liquid inflow pipe is centrally pierced from an upper surface of the cylinder, and an end thereof, through which the mixed fluid is discharged, is placed with a gap from a bottom section of the main body of the cylinder.

(ii) A fine bubble generation method, wherein an aqueous composition for fine bubble production comprising one or more components selected from the group consisting of an alkali metal salt of casein, polyoxyethylene dodecyl ether, soybean lecithin, sodium 1-octanesulfonate, saponin and trimethyl stearyl ammonium chloride; and water is used for the fine bubble generation apparatus.

The fine bubble generation apparatus according to the present invention can generate fine bubbles having a desired particle size and concentration by use of the bubble generation mechanism provided by the present inventors, even at a relatively low pressure and in a small amount of water as compared with a conventional apparatus, and therefore a fine bubble generation apparatus small in size and low in cost can be provided.

The present inventors have also found that fine bubbles can be efficiently generated by combining the bubble generation mechanism with an eddy-current generation mechanism.

BRIEF DESCRIPTION OF THE DRAWINGS

FIG. 1 includes photographs for comparison before and after a washing test with fine bubbles in addition of casein sodium (0.01% by mass, 0.005% by mass, 0.002% by mass) and in no addition of any composition, and before and after a washing test with no fine bubbles in no addition of the composition.
FIG. 2 includes a photograph of fine bubbles penetrating into greasy dirt.
FIG. 3 includes schematic views of peeling of fouling with fine bubbles generated using a bubble generation apparatus according to the present invention.
FIG. 4 includes respective schematic views of a fine bubble generation apparatus according to one aspect of the present invention.

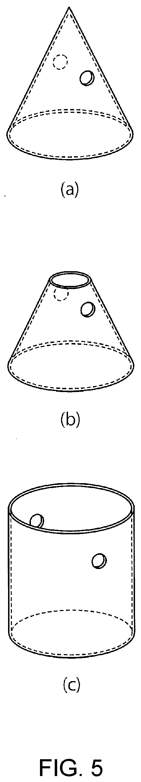

FIG. 5 includes examples of preferable modes of a bubble generation mechanism of the fine bubble generation apparatus of the present invention.
FIG. 6 includes a schematic view of the bubble generation mechanism in the present invention.

## DETAILED DESCRIPTION OF THE INVENTION

Fine bubbles

Fine bubbles refer to bubbles having a diameter of 100 µm or less, and in particular, visible cloudy bubbles having a diameter of 1 to 100 µm are referred to as microbubbles and invisible clear and colorless bubbles having a diameter of 1 µm or less are referred to as ultrafine bubbles. A distinct difference between microbubbles and ultrafine bubbles is in that ultrafine bubbles cannot be directly observed with the naked eye because of no scattering of visible light and microbubbles can be confirmed in terms of the presence thereof because of clouding. In the present invention, confirmation of generation of fine bubbles including microbubbles is performed by visually confirming such clouding. The presence of ultrafine bubbles is confirmed by measuring the particle size distribution by number distribution with laser diffraction described below in detail.

Method for measuring particle size distribution of ultrafine bubbles

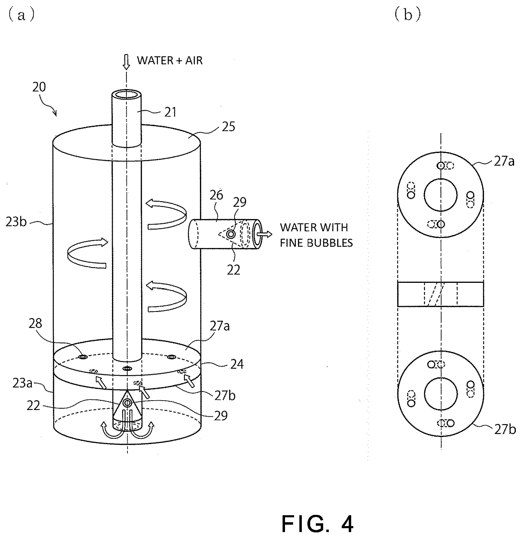

The particle size distribution by number distribution of ultrafine bubbles is measured in the following conditions.
Analysis apparatus: measurement instrument Microtrack Series (microtrac version 10.5.3-22tR) (MicrotracBEL Corp.)
Bubble generation apparatus: apparatus illustrated in FIG. 4
Bubble generation solvent: tap water (room temperature)

Millibubbles/sub-millibubbles

In the present invention, millibubbles refer to bubbles of 1 to 100 mm, and sub-millibubbles refer to bubbles of 100 µm to 1 mm. In the present invention, confirmation of generation of such bubbles is performed by visual confirmation.
Thus, minute fine bubbles have various distinctive properties as compared with usual bubbles, in particular, fine bubbles have a large specific surface area at the same volume as compared with usual bubbles, and thus a physical adsorption force on the action surface at the gas-liquid interface is very large.
One feature of fine bubbles is a self-pressurizing effect. That is, fine bubbles are bubbles having a substantially spherical shape in a liquid, and surface tension acts on the gas-liquid interface. Thus, it is known that a smaller bubble diameter leads to a higher inner pressure of each bubble to allow bubbles to disappear in a liquid with time. It has been found in the present invention that, when fine bubbles are generated in an aqueous composition including any additive as described below, bubbles have a small particle size immediately after generation and then aggregate and have a larger particle size. It has been surprisingly found that the aqueous composition is brought into contact with a washing object in the state where such fine bubbles are present in the aqueous composition for a long time, thereby allowing a washing effect to be exerted at the same level or more than that in use of a detergent, without use of any detergent and the like. Hereinafter, the additive to be added to the aqueous composition will be described.

Additive

An additive refers to any agent which is to be added as a component in a predetermined amount to a certain material to thereby serve to improve stability, physical properties, and the like of the material. The additive is not limited to such an additive, and may include one or more selected from the group consisting of a surfactant, an emulsifier, a thickener and a stabilizer. The additive may include, if desired, in addition to one or more of such additives, but not limited to the following, a PH adjuster, a moisturizer, and the like.
The additive can be one or more selected from the group consisting of an alkali metal salt of casein, serving as a thickener, polyoxyethylene dodecyl ether, sodium 1-octanesulfonate, saponin and trimethyl stearyl ammonium chloride serving as surfactants, and soybean lecithin serving as an emulsifier. The additive is preferably casein sodium, polyoxyethylene dodecyl ether, trimethyl stearyl ammonium chloride, or sodium 1-octanesulfonate, most preferably casein sodium. Fine bubbles can be generated in an aqueous composition where such an additive is added to water, thereby resulting in a dramatic enhancement in the washing effect of the aqueous composition.

Aqueous composition

An aqueous composition refers to an aqueous solution composition which is a composition having an aqueous phase being a continuous phase and including a water-soluble component. The aqueous phase is a phase containing water.

Method for producing fine bubbles

The additive for fine bubbles can be used in any fine bubble production method known in the art, and enables fine bubbles having desired properties suitable for a washing application to be produced even in the case of use of any fine bubble production method. Methods for generating fine bubbles, known in the art, are mainly an ejector method, a cavitation method, a gas-liquid shear (swirling flow) method, a pressurized dissolution method, and the like.

An ejector method is a method involving feeding a liquid pressurized by an ejector and atomizing a gas self-absorbed by countless "separated flows" generated in the ejector to thereby produce bubbles. In the method, air self-absorbed is formed into bubbles by allowing water to flow from a broad passage to a narrow passage and thereafter again allowing the water to flow to the broad passage, thereby rapidly releasing the pressure and thus crushing air self-absorbed, and rapidly increasing the flow rate in the narrow passage and thus crushing air self-absorbed, due to the flow rate increased.

A cavitation method is a method involving feeding a pressurized liquid to a generator having a cavitation structure and precipitating a dissolved gas contained in the liquid by means of a cavitation phenomenon (cavitation) occurring in a structure section, thereby producing bubbles.

A gas-liquid shear (swirling flow) method is a method involving feeding a pressurized liquid to a generator having a cylindrical structure, in an eccentric direction, to induce swirling in the cylinder and thus cut air by the shear stress, thereby producing bubbles.

A pressurized dissolution method is a method involving forcibly dissolving gas under pressure and performing pressure reduction (atmospheric relief), thereby precipitating bubbles. That is, the method is a method involving applying pressure to thereby excessively dissolve gas in an amount more than a saturation value, in a liquid, according to the Henry's law and then relieve the pressure, thereby again forming the gas dissolved in an amount more than a saturation value, into bubbles.

In the present invention, any of the methods enables fine bubbles having desired properties to be produced by use of the aqueous composition, and also enables a high washing force to be exhibited by use of the fine bubbles thus produced, without application of any physical irritation to an object to be washed.

Embodiments

The fine bubble generation apparatus according to the present invention is described with reference to the drawings.

One embodiment of the fine bubble generation apparatus for use in the present invention is described with reference to FIG. 4(a). A fine bubble generation apparatus 20 includes a gas-liquid inflow pipe 21 that allows a mixed fluid of an aqueous composition and air to be introduced, a bubble generation mechanism 22 provided on an end of the gas-liquid inflow pipe 21, through which the mixed fluid is discharged, a cylindrical gas-liquid mixed phase generation mechanism 25 disposed so that the gas-liquid inflow pipe 21 is located at the center of a cylinder, and a discharge pipe 26 provided on the side surface of the gas-liquid mixed phase generation mechanism 25, through which an aqueous composition including fine bubbles is discharged. The gas-liquid mixed phase generation mechanism 25 has a cylindrical shape, in which the gas-liquid inflow pipe 21 is pierced from the upper surface of the main body of the cylinder to the center of the cylinder and an end of the gas-liquid inflow pipe 21, through which the mixed fluid is discharged, is disposed with a gap from the bottom section of the main body of the cylinder. The interior of the main body of the cylinder is divided by an eddy-current generation mechanism 24 into two sections of a lower tank section 23a closer to the bottom section of the main body of the cylinder and an upper tank section 23b closer to the upper section of the main body of the cylinder. The eddy-current generation mechanism 24 includes an upper surface 27a having 2 to 4 holes and a lower surface 27b having 2 to 4 holes disposed with being shifted from the holes on the upper surface 27a, and the holes on the upper surface 27a and the holes on the lower surface 27b are pierced so as to correspond to each other. That is, each through-hole 28 is disposed on the cross section of the eddy-current generation mechanism 24 with being inclined at a certain angle relative to the upper surface 27a or the lower surface 27b, as illustrated in FIG. 4(b).

First, a mixed fluid of an aqueous composition and air, introduced into the gas-liquid inflow pipe 21, is introduced into the bubble generation mechanism 22, and is formed into a mixed fluid including bubbles. The bubble generation mechanism 22 includes a hollow member having a conical shape, and has a structure where one or more through-holes 29 are provided on a part of the conical face. The mixed fluid introduced into the gas-liquid inflow pipe 21 passes through the through-hole(s) 29 from the outside of the bubble generation mechanism 22 and is introduced into the bubble generation mechanism 22, and bubbles are here generated. The bubble generation mechanism 22 is provided, thereby enabling fine bubbles to be sufficiently produced even at a relatively low pressure of water and in a small amount of water.

An aqueous composition formed as a mixed fluid including bubbles, by the bubble generation mechanism 22, is discharged through an end of the gas-liquid inflow pipe 21, introduced into the lower tank section 23a of the gas-liquid mixed phase generation mechanism 25, subsequently passes though the through-hole 28 of the eddy-current generation mechanism 24 and is introduced into the upper tank section 23b of the gas-liquid mixed phase generation mechanism 25. The through-hole 28 is provided with being inclined in the cross-sectional direction as described above, and thus an aqueous composition including bubbles passes though the through-hole 28 to thereby allow the aqueous composition including bubbles to be in the form of an eddy-current in the upper tank section 23b. Such eddy-current is made around the pipe of the gas-liquid inflow pipe 21 in the upper tank section 23b, and here, whereas an aqueous composition including large-size-bubbles light in specific gravity is collected in the inside of the upper tank section 23b (the center of the cylinder shape) and separated toward the upper section of the upper tank section 23b, an aqueous composition including small-size bubbles is pushed to the outside of the upper tank section 23b (the periphery of the cylinder shape) by a centrifugal force. Thus, an aqueous composition including many small-size bubbles is produced and discharged through the discharge pipe 26 provided on the side surface of the gas-liquid mixed phase generation mechanism 25.

The discharge pipe 26 can be, if desired, provided with the bubble generation mechanism 22 in the pipe thereof, as in the gas-liquid inflow pipe 21, and the mechanism can allow an aqueous composition having small-size bubbles to pass through to thereby provide an aqueous composition having much smaller-size bubbles. If desired, two or more of the bubble generation mechanisms 22 may be disposed in parallel in the discharge pipe 26, and three or more of the bubble generation mechanisms can be provided in the entire apparatus 20 to thereby result in an enhancement in generation efficiency of fine bubbles. It is preferable to provide, if desired, one of the bubble generation mechanism 22 in the gas-liquid inflow pipe 21 and one to four of the bubble generation mechanisms 22 in the discharge pipe 26.

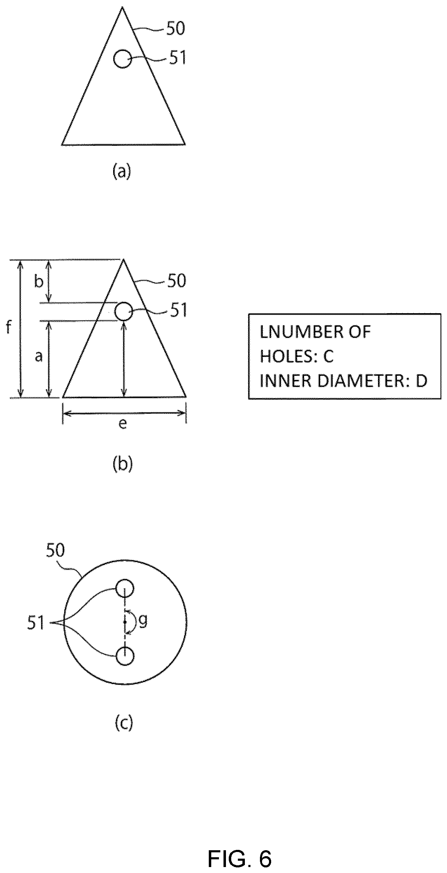

As illustrated in FIG. 6, the bubble generation mechanism used in the bubble generation apparatus according to the present invention includes a wall that partitions a mixed fluid of a liquid and air to be introduced and a bubble-containing fluid to be discharged, in which the wall has a shape opened at the bottom section and selected from the group consisting of a cone, a frustum and a column, and a through-hole for introduction of the mixed fluid into the interior of the wall is formed on at least a part of a side surface of a shape partitioned by the wall. The mixed fluid is introduced through the through-hole into the interior of the wall and discharged as a bubble-containing fluid from the opening of the bottom section.

The number of such through-holes provided in the wall of the bubble generation mechanism used in the bubble generation apparatus according to the present invention is preferably 3 to 6, and such through-holes are preferably provided at an equal interval around the wall section. The shape of each of the holes can be any shape, is not limited, and is preferably a circle. In the case where such each through-hole has a circular shape, the inner diameter thereof is 2 mm to 10 mm, preferably 2 mm to 6 mm.

In the case where the bubble generation mechanism has a conical shape, the height thereof can be 8 mm to 50 mm, preferably 10 mm to 30 mm, most preferably 12 mm to 25 mm, and the inner diameter of the bottom section can be 6 mm to 20 mm, preferably 8 mm to 18 mm, most preferably 10 mm to 16 mm.

In the case where the bubble generation mechanism has a truncated cone shape, the height of the truncated cone section can be 8 mm to 50 mm, preferably 10 mm to 30 mm, most preferably 12 mm to 25 mm, the inner diameter of the upper bottom section can be 5 mm to 10 mm, preferably 6 mm to 9 mm, most preferably 7 mm to 8 mm, and the inner diameter of the lower bottom section can be 6 mm to 20 mm, preferably 8 mm to 18 mm, most preferably 10 mm to 16 mm.

In the case where the bubble generation mechanism has a columnar shape, the height can be 8 mm to 50 mm, preferably 10 mm to 30 mm, most preferably 12 mm to 25 mm, and the inner diameter of the bottom section can be 6 mm to 20 mm, preferably 8 mm to 18 mm, most preferably 10 mm to 16 mm.

The thickness of the wall forming the bubble generation mechanism is 0.5 mm to 8 mm, preferably 1 mm to 5 mm, most preferably 2 mm to 3 mm, and the wall is preferably made by a metal such as an aluminum alloy, stainless steel or brass, a resin, or the like.

The number of such through-holes can be 2 to 8, preferably 2 to 6, most preferably 2 to 4, and in the case where a plurality of such through-holes is disposed, the through-holes are preferably disposed at an interval of a uniform angle. For example, in the case where the number of such through-holes is 2, the through-holes are disposed at an angle of 180°. In the case where the bubble generation mechanism has a conical shape, such each hole can be disposed at a position of 2 mm to 18 mm, preferably 3 mm to 15 mm, most preferably 5 mm to 10 mm from the conical top downward in the axial direction. In the case where the bubble generation mechanism has any of a frustum and a column, such each hole can be disposed at a position of 1 mm to 18 mm, preferably 2 mm to 15 mm, most preferably 2 mm to 10 mm from the upper bottom section downward in the axial direction.

The hole diameter is 1 mm to 4 mm, preferably 1 mm to 3 mm, most preferably 2 mm to 3 mm in the case of use of a pump having an output of 8.9 L/min. The hole diameter is preferably appropriately changed depending on the performance and the like of a pump to be used.

Method for measuring particle size of fine bubbles

The particle size of fine bubbles is measured in the following conditions.

Apparatus: measurement instrument Microtrack Series (microtrac version 10.5.3-225R) (MicrotracBEL Corp.)

Optical bench: MT3000II

A measurement method using the present measurement instrument can measure a particle size of sub-micrometers or less, and there is no influence of the environmental factor of a sample on the measurement value.

The 50% cumulative particle size, the average particle size and the mode particle size are used as indexes of the particle size in the present invention. The definitions of such particle sizes are described below.

50% cumulative particle size

The 50% cumulative particle size means a particle size ($\mu$m) where, when a cumulative curve is determined under the assumption that the entire volume of an aggregation of fine bubble particles is 100%, the cumulative curve reaches 50%. The relevant index is commonly used as one parameter for evaluation of the particle size distribution as a cumulative median point (Median diameter).

Average particle size

The average particle size means an average size determined from a theoretical number distribution determined from calculation. In this case, all particles are assumed to be spherical.

Mode particle size

The mode particle size refers to a particle size at the highest frequency of presence in an aggregation of fine bubble particles.

Washing method

The washing method with fine bubbles produced by the aqueous composition involves washing by allowing fine bubbles produced by use of the additive to act on a surface of a washing object, the surface being a treatment surface to be washed. Specifically, a washing object is washed by immersing the washing object in water including fine bubbles produced by use of the aqueous composition, for a predetermined time, without application of any physical irritations such as friction.

Fine bubbles produced by any known method may be used and are preferably fine bubbles produced by the apparatus 20 illustrated in FIG. 4.

The fine bubbles produced by use of the aqueous composition have a small particle size immediately after generation and thereafter have a larger particle size due to aggregation, as compared with bubbles produced in water including no additive.

In the case where the washing object is a part of a human body or an animal body, casein sodium less irritating the body, among the above additives, is preferably used. Any water such as tap water, well water, or hot spring water can be used for such washing.

Method for evaluating washing effect

The washing effect of each sample is evaluated based on a washing effect value. The washing effect value is calculated by quantifying the degree of dirt, based on the image data of the sample (gray scale).

Object to be washed

The object to be washed (washing object) with fine bubbles generated in the bubble generation apparatus according to the present invention is not particularly limited as long as it may be wetted by water, and examples thereof can include an article to which dirt such as skin oil is attached due to contact with a human body. Examples of such an article include clothing such as a uniform and a snowsuit, and linens such as a sheet and a pillowcase.

Examples of the object to be washed with fine bubbles generated using the bubble generation apparatus according to the present invention can include the skin of a human or an animal, and a part of a human or animal body, such as hairs. In a preferable aspect, fine bubbles, which are produced in warm water stored in a bathtub or warm water for use in a shower during bathing, are used for washing a part of a human or animal body.

<u>EXAMPLES</u>

The present invention is specifically described based on the following Examples, but the present invention is not intended to be limited to such Examples.

<u>Example 1: Washing ability test 1 of fine bubbles</u>

The washing ability test of fine bubbles produced by use of the aqueous composition for fine bubble production was performed using a pig skin specimen as the washing object, as follows.

<u>Test conditions</u>

(1) Specimen

Pig skin: cut leather, Craft Flower (Juton), plain, cut to 2 cm × 2 cm
Artificial dirt: color for chocolate, 10% by weight, sorbitan monopalmitate 25% by weight
Edible soybean oil 65% by weight

(2) Washing test conditions

Volume of water tank: 4 L
Temperature of warm water: 40°C
Number of specimens: in triplicate with respect to each specimen

Respective specimens where casein sodium was added in concentrations of 0.01% by mass, 0.005% by mass, and 0.002% by mass to tap water were prepared in triplicate. One where fine bubbles were generated in tap water, and one where no bubbles were generated in tap water were prepared as controls.

<u>Test procedure</u>

(1) The surface of the pig skin was photographed with a microscope.
(2) The artificial dirt in an amount of 3.5 mg/cm$^2$ was spread on and attached to the surface of the pig skin with scoopula, and the surface was photographed with a microscope.
(3) The resultant was immersed in a solution of bubbles produced by use of the fine bubble generation apparatus 20 including one bubble generation mechanism 22 having a conical shape, according to the invention of the present inventors, illustrated in FIG. 4, for a predetermined time (5 minutes).
The resultants were immersed in tap water as a control where fine bubbles were generated and tap water as a control where no fine bubbles were generated, respectively, for 5 minutes. The tap water where no fine bubbles were generated was circulated by a pump during the test.
(4) Moisture on the surface was lightly blotted by a paper towel.
(5) After the pig skin was confirmed to be completely dried, the surface was photographed with a microscope.

<u>Washing effect</u>

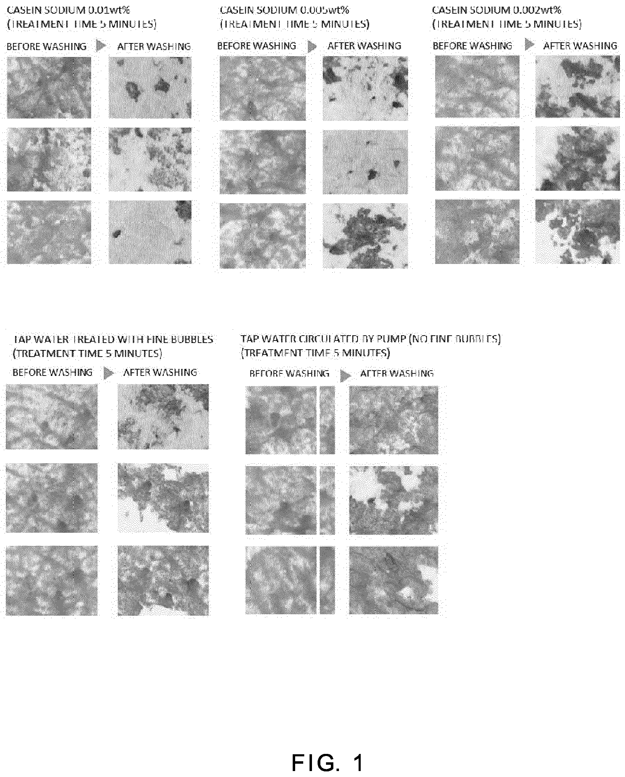

FIG. 1 includes photographs of each of the specimens before washing and after washing. As clear from the photographs, the washing effect was almost not exerted by both control samples including no casein sodium, one where fine bubbles were generated and one where no fine bubbles were generated.
On the other hand, the washing effect was exerted by all specimens washed by fine bubbles generated in water including casein sodium. In particular, a higher washing effect was exerted due to a higher concentration of casein sodium.

<u>Example 2: Washing ability test 2 of fine bubbles</u>

Test conditions

The test was performed in the same manner as in Example 1 except that the skin of the back of the human hand (the area attached was 5 cm × 5 cm) was used as a specimen and 96.8% by mass of oleic acid having a concentration of 10 mg/cm$^3$ and 2.2% by mass of sudan IV (oil red) were used in the artificial dirt.

Evaluation index of washing effect

A washing effect value was used as the evaluation index of the washing effect in the case of addition of each additive. The washing effect value was calculated as follows.

(Gray scale value before washing) - (Gray scale value after washing)                    Formula:

The gray scale value was automatically calculated using image processing software. Specifically, the procedure was made as follows.

> 1. The specimen with the dirt attached thereto was placed in a box which was sealed so that no light of the external environment was admitted and in which a light was installed to allow the brightness to be constant.
> 2. The specimen prepared in 1 was photographed. The test was performed using six specimens with respect to one washing condition, and the same specimen was photographed reciprocatingly three times (18 images in total).
> 3. The specimens after washing were also photographed according to the procedures of 1 and 2.
> 4. Each of the resulting images was subjected to gray scale measurement with image processing software GIMP.
> 5. The resulting gray scales with such reciprocation three times were averaged with respect to each of the specimens, and the average values of the six specimens before and after washing were compared. The difference in gray scale value before and after washing was defined as the washing effect value. A case where the washing evaluation value was 3 or more and the significance level calculated according to the T-test was $p < 0.05$ in comparison of the average values of the gray scales of each of the specimens in the reciprocation three times, before and after washing, was determined as having a significant difference.

A case where the washing effect value thus calculated was less than 4 was determined as exerting no washing effect, a case where the washing effect value was 4 to 7 was determined as exerting the washing effect, and in particular, a case where the washing effect value was 7.1 or more was determined as favorably exerting the washing effect. Herein, a case where the significance level was $p > 0.05$ in comparison of the average values of the gray scales of each of the specimens in the reciprocation three times, before and after washing, even if the washing effect value was less than 3 or 3 or more was determined as exerting no washing effect.

Test results

(1) Washing effect

The results of the washing test are described in Table 1 below. The minimum value of the concentration of addition, at which the washing effect was exerted, was studied with respect to each additive. The washing effect could be confirmed in respective concentrations of 0.008% or more of casein sodium, 0.003% or more of polyoxyethylene dodecyl ether, 0.01% or more of soybean lecithin, 0.01% or more of saponin, and 0.01% or more of trimethyl stearyl ammonium.

[Table 1]

| Table 1: Washing effect in addition of additive | | | | | |
|---|---|---|---|---|---|
| Sample name | Washing effect value | Viscosity (mPa·s) | Temperature (°c) | Surface tension (mN/m) | Standard deviation |
| Casein sodium 0.008% | 5.4 | 0.82 | 20.9 | 69.2 | 3 |
| Casein sodium 0.005% | - | 0.80 | 20.8 | 70.3 | 4 |
| Polyoxyethylene dodecyl ether 0.003% | 4.7 | 0.78 | 20.5 | 53.2 | 2.5 |
| Polyoxyethylene dodecyl ether 0.001% | - | 0.75 | 19.8 | 51.9 | 2.2 |

(continued)

| Table 1: Washing effect in addition of additive | | | | | |
|---|---|---|---|---|---|
| Sample name | Washing effect value | Viscosity (mPa·s) | Temperature (°c) | Surface tension (mN/m) | Standard deviation |
| Soybean lecithin 0.01% | 4.3 | 0.94 | 18.9 | 65.7 | 5.4 |
| Soybean lecithin 0.008% | - | 0.79 | 20.7 | 59.9 | 4.7 |
| Sodium 1-octanesulfonate 0.01% | 6.2 | 0.93 | 18.9 | 69.5 | 6.9 |
| Sodium 1-octanesulfonate 0.008% | - | 0.77 | 20.8 | 65.5 | 5.9 |
| Saponin 0.01% | 4.8 | 1.03 | 18.9 | 69.9 | 5.3 |
| Saponin 0.008% | - | 0.49 | 20.7 | 62.9 | 3.7 |
| Trimethyl stearyl ammonium 0.01% | 7.9 | 0.93 | 18.6 | 49.8 | 4.1 |
| Trimethyl stearyl ammonium 0.008% | - | 0.78 | 20.2 | 51.3 | 3.4 |
| In Table, "-" indicates no effect. | | | | | |

Example 3: Washing ability test 3 of fine bubbles

The washing ability test of fine bubbles was performed by the same method as in Example 1 except that two bubble generation mechanisms 22 having a conical shape were included.

As a result, only a case where casein sodium was used as the additive was decreased in the minimum value of the concentration of the additive, at which the washing ability was exhibited, as compared with the case of Example 1 where fine bubbles produced by the apparatus having one cone were used.

Specifically, the minimum amount where the effect was exerted was 0.004% (washing value = 5.8), and no washing effect was exerted at a value equal to or less than such a washing value. In the case of the present Example, the washing value was 8.5 in a concentration of 0.008% of casein sodium, and was increased as compared with Example 1.

The reason for this is considered because the conical mechanism was increased to two of the mechanisms to thereby result in an increase in the amount of fine bubbles generated.

Example 4: Measurement of particle size of fine bubbles

(1) Measurement conditions of particle size

Measurement instrument

  Microtrack Series (microtrac version 10.5.3-225R)
  Optical bench: MT3000II

(2) Measurement method of particle size

Fine bubbles were generated in water to which 0.01% of casein sodium as one additive was added, by the above fine bubble generation apparatus 20 according to the invention of the present inventors. The particle size of the sample was measured in the above measurement conditions after operation of the apparatus for 5 minutes and after 5 minutes from the stop of the operation.

(3) Measurement results of particle size

Table 2 below describes the measurement values of the mode particle sizes, the average particle sizes and the 50% cumulative particle sizes, of fine bubbles generated by adding casein sodium among the additives and of fine bubbles generated in tap water with no addition of any additive, after 5 minutes from the start of operation of the fine bubble generation apparatus and after 5 minutes from the stop of the operation of the apparatus.

[Table 2]

Table 2: Comparison in particle size between addition of casein sodium and no addition thereof

| Sample name | Mode particle size (μm) | Average particle size (μm) | 50% cumulative particle size (μm) |
|---|---|---|---|
| Solution in tap water immediately after operation with fine bubbles for 5 minutes | 37 | 72 | 59.77 |
| Solution in tap water left for 5 minutes after generation of fine bubbles | 37 | 70.38 | 54.96 |
| Solution with 0.01% casein sodium added, immediately after operation for 5 minutes | 31.11 | 62.75 | 49.85 |
| Solution with 0.01% casein sodium added, left for 5 minutes after operation | 44 | 91.4 | 79.13 |

The mode particle size was not changed and the average particle size and the 50% cumulative particle size were decreased with respect to no addition of casein sodium, during a period from after operation of the fine bubble generation apparatus for 5 minutes to after leaving for 5 minutes after fine bubble generation. On the other hand, all the mode particle size, the average particle size and the 50% cumulative particle size were increased with respect to addition of casein sodium, during a period after operation of the fine bubble generation apparatus for 5 minutes to after leaving for 5 minutes after fine bubble generation.

It could also be confirmed that bubbles were shrunk with time with respect to no addition of casein sodium. On the other hand, the particle size after 5 minutes from the generation was decreased with respect to addition of casein sodium as compared with no addition of casein sodium. On the other hand, the particle size after leaving for 5 minutes after the operation was increased.

Example 5: Change in particle size of fine bubbles over time

In order that the relationship between the washing effect of each additive and the particle size over time was examined, fine bubbles were generated in water to which each additive was added in a concentration of 0.01%, on another day than that in Example 1, and the 50% cumulative particle size was measured after 5 minutes from the start of operation of the fine bubble generation apparatus and after 5 minutes from the stop of the operation of the apparatus. These results are described in Table 3 below.

[Table 3]

Table 3: Change in particle size of fine bubbles over time with respect to addition of each additive

| Group | Additive name | 50% cumulative particle size (μm) in operation for 5 minutes | 50% cumulative particle size (μm) after stop for 5 minutes | Washing evaluation value |
|---|---|---|---|---|
| 1 | Casein sodium | 20.74 | 63.14 | 11.3 |
| | Soybean lecithin | 26.69 | 48.31 | 4.3 |
| 2 | Polyoxyethylene dodecyl ether | 0.544 | 58.99 | 10.1 |
| | Trimethyl stearyl ammonium chloride | 0.561 | 54.14 | 7.9 |
| 3 | Saponin | 71 | 64.48 | 4.8 |
| | Sodium 1-octanesulfonate | 108.5 | 104 | 6.2 |
| Control | Bubble generation in tap water without any additive | 69.53 | 51.44 | 2.8 |

Fine bubbles in the case of casein sodium included as the additive had a 50% cumulative particle size of about 10 $\mu$m to 65 $\mu$m and fine bubbles in the case of polyoxyethylene dodecyl ether or trimethyl stearyl ammonium included as the additive had a 50% cumulative particle size of about 0.5 $\mu$m to 65 $\mu$m, after 5 minutes from the start. Fine bubbles had a 50% cumulative particle size of about 40 $\mu$m to 90 $\mu$m after 5 minutes from the stop. All the particle sizes were smaller than those in Example 3, and the reason for this was because many bubbles having a smaller particle size were generated by an increase in the amount of water in the pump used.

The particle size of fine bubbles generated in tap water with no addition of any additive was shrunk over time. The reason for this is considered because of self-shrinkage (self-pressurizing effect) of fine bubbles as known in the art.

The particle size after 5 minutes from the start of operation of the bubble generation apparatus was smaller in the cases of casein sodium and soybean lecithin in group 1 and polyoxyethylene dodecyl ether and trimethyl stearyl ammonium chloride in group 2, than the case of no addition. However, the particle size was increased over time in the cases of such additives unlike the case of no addition.

The particle size was decreased over time in the cases of saponin and sodium 1-octanesulfonate in group 3, like the case of no addition.

Conclusion

It is presumed that an increase in average particle size over time in the case of addition of casein sodium is affected by the property of aggregation of casein by itself.

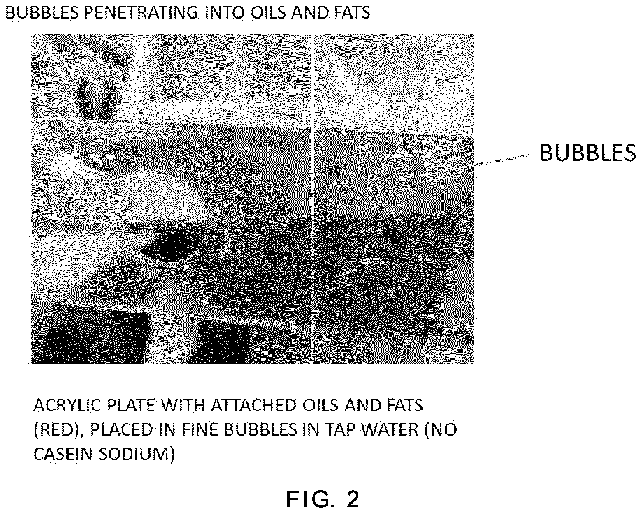

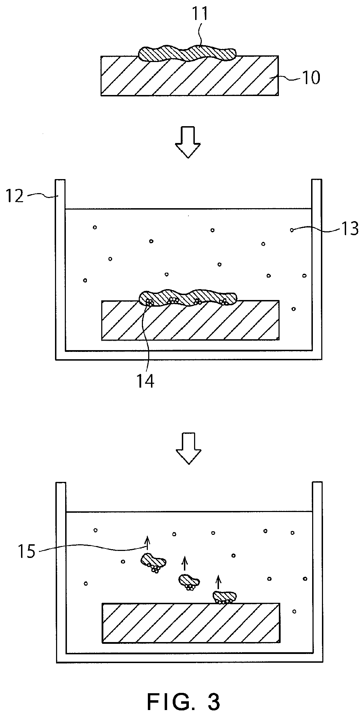

Without being bound to the following theory, in the case where an acrylic plate to which oils and fats are attached is placed in a solution of fine bubbles, penetration of the bubbles into the oils and fats is observed (FIG. 2), and thus it is presumed that bubbles penetrate into oils and fats and aggregate therein and thus are expanded, resulting in an increase in ascending force to allow the oils and fats to be peeled from the pig skin. In particular, the particle size immediately after fine bubble generation is smaller in the respective cases of addition of the additives in group 1 with shrinkage of the particle size to a micrometer level and the additives in group 2 with shrinkage of the particle size to a nanometer level, than the case of no addition, and thus it is presumed that an increase in washing force is achieved because bubbles more easily penetrate into oils and fats and thereafter aggregate and are increased in particle size, resulting in an increase in ascending force to allow any dirt to be peeled. In other words, it is presumed that a washing object 10 having fouling 11 is immersed in water including fine bubbles 13 generated in a water tank 12, thereby allowing small-size fine bubbles to penetrate into the fouling 11 and aggregate in the fouling 11 and thus imparting an ascending force 15 due to fine bubbles aggregated 14 to allow the fouling 11 to ascend, thereby peeling the fouling from the washing object 11 (FIG. 3). Accordingly, it is considered that dirt is peeled from a washing object according to an action completely different from that according to a conventional washing method with a surfactant.

The reason for a high washing value of sodium 1-octanesulfonate among additives in group 3 with a tendency of shrinkage of the particle size over time as in the case of no addition of any additive is considered because sodium 1-octanesulfonate has a high washing force even in no use in combination with fine bubbles and thus a composition thereof originally has a high washing force.

It has been thus found that fine bubbles produced by use of the aqueous additive is excellent in washing force as compared with fine bubbles produced by use of no additive.

Example 6 Effects of position and number of holes in conical shape on bubble generation

The effects of the position of each hole and the number of holes in the bubble generation mechanism in the present invention on generation state of bubbles were examined. The position of each hole and the number of holes are defined by parameters a to f as illustrated in FIG. 7. Herein, parameter a represents the distance from the bottom section of the cone to the lower end of each hole in the axial direction, parameter b represents the distance from the top of the cone to the upper end of each hole in the axial direction, parameter c represents the number of holes, parameter d represents the inner diameter of each hole, parameter e represents the inner diameter of the bottom section of the cone, parameter f represents the length of the cone section in the axial direction, and parameter g represents the angle of disposing of each hole. The test conditions other than the position of each hole and the number of holes were the same as those in Example 1. The results are described in Table 4 below.

[Table 4]

Table 4

| No. | Shape | a (mm) | b (mm) | c (holes) | d (mm) | e (mm) | f (mm) | g (°) | Generation state |
|---|---|---|---|---|---|---|---|---|---|
| 6-1 | Truncated cone | 15 | 10 | 2 | 2 | 12 | 25 | 180 | Most favorably generated |
| 6-2 | Cone | 20 | 5 | 2 | 2 | 12 | 25 | 180 | Generated |
| 6-3 | Cone | 7 | 18 | 2 | 2 | 12 | 25 | 180 | Slightly generated |
| 6-4 | Cone | 15 | 10 | 1 | 4 | 12 | 25 | | Slightly generated, but insufficiently generated |
| 6-5 | Cone | 15 | 10 | 4 | 1 | 12 | 25 | 90 | Generated |
| 6-6 | Cone | 15 | 10 | 2 | 2 | 12 | 25 | 90 | Generated, but slightly lightly generated |
| 6-7 | Cone | 15 | 10 | 2 | 2 | 12 | 25 | 45 | Generated, but slightly lightly generated |

From the results, the number of holes provided in a cone is desirably two or more. In the case where two or more holes are disposed, the holes can be disposed at an angle of 45° to 180°. In particular, in the case where two holes are disposed, the holes are most preferably disposed at an angle of 180°. A preferable size of each hole is needed to be appropriately adjusted depending on the amount of water to be set, although being 1 to 4 mm in terms of the inner diameter in the present Examples. A too large number of holes decreases generation of bubbles, and the number of holes is preferably six or less.

The amount of water output from the pump was increased to 22 L/min in the same conditions as in the present Example 6-1, and thus sufficient generation of fine bubbles could be observed in an inner diameter of each hole of up to 8 mm. In the case where the inner diameter of each hole was increased to 10 mm, generation of fine bubbles could be observed, although the concentration was low. Accordingly, in the case of use in the apparatus according to the present invention, the inner diameter of each hole provided in the conical section of the bubble generation mechanism preferably falls within the range from 1 to 10 mm.

Example 7: Fine bubble generation test using improved mode

Fine bubbles were generated using the fine bubble generation apparatus illustrated in FIG. 4, and the particle size was measured.

(1) Measurement conditions of particle size

Measurement instrument

    Microtrack Series (microtrac version 10.5.3-225R)
    Optical bench: MT3000II
    Volume of water tank: 4 L

(2) Measurement method of particle size

Fine bubbles were generated in tap water and in water to which 0.01% of casein sodium was added. The particle size of each of the samples was measured in the above measurement conditions after operation of the apparatus for 5 minutes and after 5 minutes from the stop of the operation.

(3) Results of particle size measurement

Table 5 below describes the measurement values of the mode particle sizes, the average particle sizes and the 50% cumulative particle sizes, of fine bubbles generated by adding casein sodium among the additives i and of fine bubbles generated in tap water with no addition of any additive, after 5 minutes from the start of operation of the fine bubble generation apparatus and after 5 minutes from the stop of the operation of the apparatus.

[Table 5]

Table 5: Comparison in particle size between addition of casein sodium and no addition thereof

| Sample name | Mode particle size (μm) | Average particle size (μm) | 50% cumulative particle size (μm) |
|---|---|---|---|
| Solution in tap water immediately after operation with fine bubbles for 5 minutes | 37 | 72 | 59.77 |
| Solution in tap water left for 5 minutes after generation of fine bubbles | 37 | 70.38 | 54.96 |
| Solution with 0.01% casein sodium added, immediately after operation for 5 minutes | 31.11 | 62.75 | 49.85 |
| Solution with 0.01% casein sodium added, left for 5 minutes after operation | 44 | 91.4 | 79.13 |

It was thus confirmed that fine bubbles were generated using the fine bubble generation apparatus of the present invention, illustrated in FIG. 4.

Example 8: Ultrafine bubble generation test

The generation state of ultrafine bubbles along with generation of fine bubbles in the case of use of the fine bubble generation apparatus illustrated in FIG. 4 was confirmed.

(1) Measurement conditions of particle size distribution Measurement instrument

Microtrack Series (microtrac version 10.5.3-225R)
Optical bench: UPA-UZ
Volume of water tank: 4 L

(2) Measurement method of particle size distribution

Bubbles were generated in tap water (room temperature) by operating the apparatus illustrated in FIG. 4. The particle size distribution (number distribution) in the measurement range from 0.800 nm to 6,540 nm, of the sample, was measured in the above measurement conditions after operation of the apparatus for 5 minutes and after 5 minutes from the stop of the operation thereof.

(3) Measurement results of particle size distribution

Table 6 below describes the measurement values of the mode particle sizes, the average particle sizes and the 50% cumulative particle sizes after operation of the bubble generation apparatus in tap water for 5 minutes and after 5 minutes from the stop of the operation thereof.

[Table 6]

Table 6

| Sample name | Mode particle size (nm) | Average particle size (nm) | 50% cumulative particle size (nm) |
|---|---|---|---|
| Solution in tap water immediately after operation with fine bubbles for 5 minutes | 121.5 | 115.3 | 111.4 |
| Solution in tap water, left for 5 minutes after generation of fine bubbles | 72.3 | 86.7 | 75.2 |

It could be confirmed from the above results that ultrafine bubbles of 1 $\mu$m (= 1000 nm) or less were generated. It could also be confirmed that a decrease in the particle size over time, as a characteristic behavior of ultrafine bubbles, was observed. Generation of ultrafine bubbles usually requires a larger and more expensive apparatus than generation of fine bubbles, and it can be thus said that the apparatus according to the present invention is very excellent in terms of having a very small and simple structure.

Industrial Applicability

The aqueous composition for fine bubble production and the washing method with fine bubbles, and the fine bubble generation apparatus and the method for producing fine bubbles by use of the apparatus, according to the present invention, are useful in, for example, washing of cloths, and bathing in a medical facility.

Reference Signs List

10 washing object, 11 fouling, 12 water tank, 13 fine bubbles, 14 fine bubbles aggregated, 15 ascending force, 20 fine bubble generation apparatus, 21 gas-liquid inflow pipe, 22 bubble generation mechanism, 23a lower tank section, 23b upper tank section, 24 eddy-current generation mechanism, 25 gas-liquid mixed phase generation mechanism, 26 discharge pipe, 27a upper surface, 27b bottom surface, 28, 29, 51 through-hole, 50 wall

**Claims**

**1.**   A fine bubble generation apparatus (20) comprising

a fine bubble generation mechanism (22) that generates a fine bubble-containing fluid from a mixed fluid of a liquid and air,
a gas-liquid inflow pipe (21) that allows for introduction of the mixed fluid;
a cylindrical gas-liquid mixed phase generation mechanism (25) where the gas-liquid inflow pipe (21) is provided at the center of a cylinder;
an eddy-current generation mechanism (24) which is provided so as to divide the interior of the gas-liquid mixed phase generation mechanism (25) into two sections, which comprises an upper surface (27a) having 2 to 4 holes (28) and a lower surface (27b) having 2 to 4 holes disposed with being shifted from the holes (28) of the upper surface (27a), and in which the holes (28) of the upper surface (27a) and the holes of the lower surface (27b) are pierced so as to correspond to each other; and
a discharge pipe (26) provided on a side surface of the gas-liquid mixed phase generation mechanism (25), wherein
the fine bubble generation mechanism (22) comprises a wall (50) that partitions the mixed fluid to be introduced and a fine bubble-containing fluid to be discharged,
the wall (50) has a shape opened at a bottom section and selected from the group consisting of a cone, a frustum and a column,
a through-hole (29, 51) for introduction of the mixed fluid into the interior of the wall (50) is formed on at least a part of a side surface of a shape partitioned by the wall (50), and
the mixed fluid is introduced through the through-hole (29, 51) into the interior of the wall (50) and discharged as a fine bubble-containing fluid from the opening of the bottom section, and
the bubble generation mechanism (22) is provided on an end of the gas-liquid inflow pipe (26) through which the mixed fluid is discharged, and

the gas-liquid inflow pipe (21) is centrally pierced from an upper surface of the cylinder (25), and an end thereof, through which the mixed fluid is discharged, is placed with a gap from a bottom section of the main body of the cylinder (25).

2. A fine bubble generation method, wherein an aqueous composition for fine bubble production comprising one or more components selected from the group consisting of an alkali metal salt of casein, polyoxyethylene dodecyl ether, soybean lecithin, sodium 1-octanesulfonate, saponin and trimethyl stearyl ammonium chloride; and water is used for the fine bubble generation apparatus according to claim 1.

**Patentansprüche**

1. Feinblasenerzeugungseinrichtung (20), umfassend

einen Feinblasenerzeugungsmechanismus (22), der aus einem gemischten Fluid aus einer Flüssigkeit und Luft ein feinblasenhaltiges Fluid erzeugt,
ein Gas-Flüssigkeits-Zuflussrohr (21), das das Einbringen des gemischten Fluids ermöglicht;
einen zylindrischen Gas-Flüssigkeits-Mischphasenerzeugungsmechanismus (25), wobei das Gas-Flüssigkeits-Zuflussrohr (21) in der Mitte eines Zylinders bereitgestellt ist;
einen Wirbelstromerzeugungsmechanismus (24), der so bereitgestellt ist, dass er das Innere des Gas-Flüssigkeits-Mischphasenerzeugungsmechanismus (25) in zwei Abschnitte unterteilt, der eine obere Oberfläche (27a), die 2 bis 4 Löcher (28) aufweist, und eine untere Oberfläche (27b) umfasst, die 2 bis 4 Löcher aufweist, die von den Löchern (28) der oberen Oberfläche (27a) verschoben angeordnet sind, und in dem die Löcher (28) der oberen Oberfläche (27a) und die Löcher der unteren Oberfläche (27b) so durchstochen sind, dass sie einander entsprechen; und
ein Ablassrohr (26), das an einer Seitenfläche des Gas-Flüssigkeits-Mischphasenerzeugungsmechanismus (25) bereitgestellt ist, wobei
der Feinblasenerzeugungsmechanismus (22) eine Wand (50) umfasst, die das einzubringende gemischte Fluid und ein abzulassendes feinblasenhaltiges Fluid abteilt,
die Wand (50) weist eine Form auf, die an einem Bodenabschnitt geöffnet und aus der Gruppe ausgewählt ist, die aus einem Kegel, einem Kegelstumpf und einer Säule besteht,
ein Durchgangsloch (29, 51) zum Einbringen des gemischten Fluids in das Innere der Wand (50) ist an mindestens einem Teil einer Seitenfläche einer von der Wand (50) abgeteilten Form ausgebildet, und
das gemischte Fluid wird durch das Durchgangsloch (29, 51) in das Innere der Wand (50) eingebracht und als feinblasenhaltiges Fluid aus der Öffnung des Bodenabschnitts abgelassen, und
der Blasenerzeugungsmechanismus (22) ist an einem Ende des Gas-Flüssigkeits-Zuflussrohrs (26) bereitgestellt, durch das das gemischte Fluid abgelassen wird, und
das Gas-Flüssigkeits-Zuflussrohr (21) ist mittig von einer oberen Oberfläche des Zylinders (25) durchstochen, und ein Ende davon, durch das das gemischte Fluid abgelassen wird, ist mit einem Spalt von einem Bodenabschnitt des Hauptkörpers des Zylinders (25) platziert.

2. Verfahren zur Feinblasenerzeugung, wobei eine wässrige Zusammensetzung zur Feinblasenerzeugung eine oder mehrere Komponenten umfasst, die aus der Gruppe ausgewählt sind, bestehend aus einem Alkalimetallsalz von Kasein, Polyoxyethylendodecylether, Sojalecithin, Natrium-1-octansulfonat, Saponin und Trimethylstearylammoniumchlorid; und Wasser für die Feinblasenerzeugungseinrichtung nach Anspruch 1 verwendet wird.

**Revendications**

1. Appareil (20) de génération de fines bulles comprenant

un mécanisme (22) de génération de fines bulles qui génère un fluide contenant de fines bulles à partir d'un fluide mixte de liquide et d'air,
un tuyau (21) d'arrivée de gaz-liquide qui permet l'introduction du fluide mixte ;
un mécanisme (25) de génération de phase mixte gaz-liquide cylindrique où le tuyau (21) d'arrivée de gaz-liquide est prévu au centre d'un cylindre ;
un mécanisme (24) de génération de courant de Foucault qui est prévu de manière à diviser l'intérieur du mécanisme (25) de génération de phase mixte gaz-liquide en deux sections, qui comprend une surface supérieure (27a) présentant 2 à 4 trous (28) et une surface inférieure (27b) présentant 2 à 4 trous disposés pour être décalés des trous (28) de la surface supérieure (27a),

et dans lequel les trous (28) de la surface supérieure (27a) et les trous de la surface inférieure (27b) sont percés de manière à correspondre les uns aux autres ; et

un tuyau (26) de décharge prévu sur une surface latérale du mécanisme (25) de génération de phase mixte gaz-liquide, dans lequel

le mécanisme (22) de génération de fines bulles comprend une paroi (50) qui sépare le fluide mixte à introduire et un fluide contenant de fines bulles à décharger,

la paroi (50) présente une forme ouverte au niveau d'une section inférieure et sélectionnée dans le groupe consistant en un cône, un tronc de cône et une colonne,

un trou traversant (29, 51) pour l'introduction du fluide mixte dans l'intérieur de la paroi (50) est formé sur au moins une partie d'une surface latérale d'une forme séparée par la paroi (50), et

le fluide mixte est introduit à travers le trou traversant (29, 51) dans l'intérieur de la paroi (50) et déchargé sous forme de fluide contenant des fines bulles à partir de l'ouverture de la section inférieure, et

le mécanisme (22) de génération de bulles est prévu sur une extrémité du tuyau (26) d'arrivée de gaz-liquide à travers lequel le fluide mixte est déchargé, et

le tuyau (21) d'arrivée de gaz-liquide est percé en son centre à partir d'une surface supérieure du cylindre (25), et une extrémité de celui-ci, à travers laquelle le fluide mixte est déchargé, est placée avec un espace à partir d'une section inférieure du corps principal du cylindre (25).

2. Procédé de génération de fines bulles, dans lequel une composition aqueuse pour la production de fines bulles comprenant un ou plusieurs composants sélectionnés dans le groupe consistant en un sel de métal alcalin de caséine, du polyoxyéthylène dodécyl éther, de la lécithine de soja, du 1-octanesulfonate de sodium, de la saponine et du chlorure de triméthyl stéaryle ammonium ; et de l'eau est utilisée pour l'appareil de génération de fines bulles selon la revendication 1.

CASEIN SODIUM 0.01wt%
(TREATMENT TIME 5 MINUTES)

BEFORE WASHING ▷ AFTER WASHING

CASEIN SODIUM 0.005wt%
(TREATMENT TIME 5 MINUTES)

BEFORE WASHING ▷ AFTER WASHING

CASEIN SODIUM 0.002wt%
(TREATMENT TIME 5 MINUTES)

BEFORE WASHING ▷ AFTER WASHING

TAP WATER TREATED WITH FINE BUBBLES
(TREATMENT TIME 5 MINUTES)

BEFORE WASHING ▷ AFTER WASHING

TAP WATER CIRCULATED BY PUMP (NO FINE BUBBLES)
(TREATMENT TIME 5 MINUTES)

BEFORE WASHING ▷ AFTER WASHING

# FIG. 1

BUBBLES PENETRATING INTO OILS AND FATS

BUBBLES

ACRYLIC PLATE WITH ATTACHED OILS AND FATS
(RED), PLACED IN FINE BUBBLES IN TAP WATER (NO
CASEIN SODIUM)

FIG. 2

11

10

12

13

14

15

FIG. 3

(a)

(b)

WATER + AIR

20

21

25

26   29

23b

WATER WITH
FINE BUBBLES

22

28

27a

24

23a

22

27b

29

27a

27b

# FIG. 4

(a)

(b)

(c)

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017015846 A
- JP 2017015863 A
- JP 2005118462 A
- JP 2007083142 A
- JP 2016132712 A
- JP 2006289183 A
- JP 2012250138 A
- DE 19510651 A1
- CN 103111033 A
- US 2012126436 A1
- US 20120126436 A1

### Non-patent literature cited in the description

- Fundamental properties involved in the washing for the micro/nano-bubble water: Bulletin of the Department of Home Economics. Kyoritsu Women's Junior College
- *HP of The Union of Fine Bubbles Scientists and Engineers*, http://www.fb-union.org/index.html